# EUROPEAN PATENT APPLICATION

(11) **EP 4 614 998 A1**
(43) Date of publication of application: **10.09.2025**
(21) Application number: 23934891.5
(22) Date of filing: 22.09.2023
(51) Int. Cl.: H04Q 11/00

(54) **MESSAGE TRANSMISSION METHOD, MASTER DEVICE, OLT, AND OPTICAL COMMUNICATION SYSTEM**

(30) Priority: 28.04.2023 CN 202310489168
(71) Applicant: Huawei Technologies Co., Ltd., Shenzhen, Guangdong 518129 (CN)
(72) Inventor: WU, Xuming, Shenzhen, Guangdong 518129 (CN); ZENG, Yan, Shenzhen, Guangdong 518129 (CN); HU, Shubao, Shenzhen, Guangdong 518129 (CN)
(74) Representative: Huawei European IPR
(86) International application number: PCT/CN2023/120774
(87) International publication number: WO 2024/221722

(57) **Abstract**

Embodiments of this application provide a message transmission method, a main device, an OLT, and an optical communication system. In this application, a message format used for transmission between the main device and the OLT in an FTTR system is newly defined. In an uplink direction, the main device sends a second message to the OLT based on a first message sent by a sub device, where a first identifier of the sub device is newly added to the second message. In a downlink direction, the first identifier is also newly added to a third message sent by the OLT to the main device, so that the main device sends a fourth message to the corresponding sub device based on the third message. In other words, this solution implements management of the OLT on the sub device, and helps manage the FTTR system in a unified manner. In addition, an existing communication protocol may still be used between the main device and the sub device, and the management of the OLT on the sub device can be implemented without greatly adjusting the existing communication protocol. An application effect is good.

## Description

This application claims priority to Chinese Patent Application No. 202310489168.2, filed with the China National Intellectual Property Administration on April 28, 2023 and entitled "MESSAGE TRANSMISSION METHOD, MAIN DEVICE, OLT, AND OPTICAL COMMUNICATION SYSTEM", which is incorporated herein by reference in its entirety.

### TECHNICAL FIELD

This application relates to the field of optical communication, and in particular, to a message transmission method, a main device, an OLT, and an optical communication system.

### BACKGROUND

In a gigabit-capable passive optical network (gigabit-capable PON, GPON), an optical network terminal management and control interface (optical network terminal management and control interface, OMCI) is a protocol for information exchanged between an optical line terminal (optical line terminal, OLT) and an optical network termination (optical network termination, ONT), and is used to implement management of the OLT on the ONT in the GPON network, where the management includes configuration management, fault management, performance management, security management, and the like.

With the popularization of fixed access broadband and the emergence of various intelligent terminals, to resolve a problem of Wi-Fi coverage of a home network, a fiber to the room (fiber to the room, FTTR) technology has been proposed and has attracted wide attention. A main idea of FTTR is to further extend a fiber to a residential room based on fiber to the home (fiber to the home, FTTH). However, there is no management protocol for FTTR currently.

### SUMMARY

Embodiments of this application provide a message transmission method, a main device, an OLT, and an optical communication system. A message format used for transmission between the main device and the OLT in an FTTR system is newly defined, and management of the OLT on a sub device is implemented, to help manage the FTTR system in a unified manner.

According to a first aspect, an embodiment of this application provides a message transmission method. The message transmission method is performed by a main device. In an uplink transmission direction, the main device receives a first message sent by a sub device, and sends a second message to an OLT based on the first message, where both the first message and the second message include a first identifier of the sub device. In a downlink transmission direction, the main device receives a third message that is sent by the OLT and that includes the first identifier, and sends a fourth message to the sub device based on the third message, where the third message includes the first identifier of the sub device.

In this implementation, a message format used for transmission between the main device and the OLT in an FTTR system is newly defined. The first identifier of the sub device is newly added to the second message in the uplink direction, and the first identifier of the sub device is also newly added to the third message in the downlink direction. The newly defined message format is used to implement management of the OLT on the sub device, and help manage the FTTR system in a unified manner. In addition, an existing communication protocol may still be used between the main device and the sub device, and the management of the OLT on the sub device can be implemented without greatly adjusting the existing communication protocol. An application effect is good.

In some possible implementations, considering that a plurality of downlink ports of the main device are usually respectively connected to a plurality of different sub devices, the second message and the third message further include a second identifier of a downlink port that is on the main device and that is associated with the sub device, so that a specific sub gateway is determined based on the first identifier and the second identifier.

In some possible implementations, the second message and the third message are OMCI messages newly defined in this application. It should be understood that, an OMCI message in a standard format is used to implement management of the OLT on a main gateway, and the newly defined OMCI message is used to implement management of the OLT on the sub gateway. The newly defined OMCI message is an extension based on the OMCI message in the standard format, is compatible with an existing standard, and has a good practical effect.

In some possible implementations, a device identifier field of the newly defined OMCI message indicates that the OMCI message is a basic OMCI message or an extended OMCI message used to transmit information exchanged between the OLT and the sub device, so that the OMCI message in the standard format and the newly defined OMCI message are distinguished based on the device identifier field.

In some possible implementations, the second message further includes a check field used to check integrity of the second message, and the third message further includes a check field used to check integrity of the third message, to improve transmission reliability.

In some possible implementations, the first message includes a third identifier of the OLT, and that the main device sends a second message to an optical line terminal OLT based on the first message includes: The main device generates the second message based on the first message, and sends the second message to the OLT based on the third identifier. That the main device sends a fourth message to the sub device based on the third message includes: The main device generates the fourth message based on the third message, and sends the fourth message to the sub device based on the first identifier.

In some possible implementations, the first message and the second message have same message content, and/or the third message and the fourth message have same message content. In other words, the main device may transparently transmit the message content in the first message to the OLT by using the second message, and the main device may further transparently transmit the message content in the third message to the sub device by using the fourth message. It should be understood that, the message content may be considered as to-be-transmitted message content, and does not include the first identifier or the second identifier. Optionally, the main device may alternatively generate to-be-transmitted message content based on an actual requirement. In other words, the first message and the second message may alternatively have different message content, and the third message and the fourth message may alternatively have different message content.

In some possible implementations, before the main device receives the third message sent by the OLT, the method further includes: The main device sends, to the OLT, a fifth message including the first identifier, to enable the OLT to generate the third message based on the fifth message. In other words, the main device reports information about the sub device to the OLT by using the fifth message, so that the OLT generates the third message including the first identifier.

According to a second aspect, an embodiment of this application provides a message transmission method. The message transmission method is performed by an OLT. In an uplink transmission direction, the OLT receives a second message sent by a main device, where the second message is generated by the main device based on a first message sent by a sub device, and both the first message and the second message include a first identifier of the sub device. In a downlink transmission direction, the OLT sends, to the main device, a third message including the first identifier, to enable the main device to send a fourth message to the sub device based on the third message.

In some possible implementations, the second message and the third message further include a second identifier of a downlink port that is on the main device and that is associated with the sub device.

In some possible implementations, the second message and the third message are newly defined OMCI messages.

In some possible implementations, a device identifier field of the OMCI message indicates that the OMCI message is a basic OMCI message or an extended OMCI message used to transmit information exchanged between the OLT and the sub device.

In some possible implementations, the second message further includes a check field used to check integrity of the second message, and the third message further includes a check field used to check integrity of the third message.

In some possible implementations, the first message and the second message have same message content, and/or the third message and the fourth message have same message content.

In some possible implementations, before the OLT sends the third message to the main device, the method further includes: The OLT receives a fifth message that is sent by the main device and that includes the first identifier. The OLT generates the third message based on the fifth message.

According to a third aspect, an embodiment of this application provides a main device. The main device includes a processing unit and a transceiver unit. The transceiver unit is configured to receive a first message sent by a sub device, where the first message includes a first identifier of the sub device. The processing unit is configured to generate a second message based on the first message, where the second message includes the first identifier of the sub device. The transceiver unit is configured to send the second message to an optical line terminal OLT based on the first message. The transceiver unit is configured to receive a third message sent by the OLT, where the third message includes the first identifier. The processing unit is configured to generate a fourth message based on the third message. The transceiver unit is configured to send the second message to the sub device based on the third message.

In some possible implementations, the second message and the third message further include a second identifier of a downlink port that is on the main device and that is associated with the sub device.

In some possible implementations, the second message and the third message are newly defined OMCI messages.

In some possible implementations, a device identifier field of the OMCI message indicates that the OMCI message is a basic OMCI message or an extended OMCI message used to transmit information exchanged between the OLT and the sub device.

In some possible implementations, the second message further includes a check field used to check integrity of the second message, and the third message further includes a check field used to check integrity of the third message.

In some possible implementations, the first message includes a third identifier of the OLT, and the transceiver unit is specifically configured to: send the second message to the OLT based on the third identifier, and send the fourth message to the sub device based on the first identifier.

In some possible implementations, the first message and the second message have same message content, and/or the third message and the fourth message have same message content.

In some possible implementations, before the transceiver unit receives the third message sent by the OLT, the transceiver unit is further configured to send, to the OLT, a fifth message including the first identifier, to enable the OLT to generate the third message based on the fifth message.

According to a fourth aspect, an embodiment of this application provides an OLT. The OLT includes a processing unit and a transceiver unit. The transceiver unit is configured to receive a second message sent by a main device, where the second message is generated by the main device based on a first message sent by a sub device, the first message includes a first identifier of the sub device, and the second message includes the first identifier. The processing unit is configured to generate a third message, where the third message includes the first identifier. The transceiver unit is configured to send the third message to the main device, to enable the main device to send a fourth message to the sub device based on the third message.

In some possible implementations, the second message and the third message further include a second identifier of a downlink port that is on the main device and that is associated with the sub device.

In some possible implementations, the second message and the third message are newly defined OMCI messages.

In some possible implementations, a device identifier field of the OMCI message indicates that the OMCI message is a basic OMCI message or an extended OMCI message used to transmit information exchanged between the OLT and the sub device.

In some possible implementations, the second message further includes a check field used to check integrity of the second message, and the third message further includes a check field used to check integrity of the third message.

In some possible implementations, the first message and the second message have same message content, and/or the third message and the fourth message have same message content.

In some possible implementations, before the transceiver unit sends the third message to the main device, the transceiver unit is further configured to receive a fifth message that is sent by the main device and that includes the first identifier, and the processing unit is further configured to generate the third message based on the fifth message.

According to a fifth aspect, an embodiment of this application provides an optical communication system. The optical communication system includes the main device described in any implementation of the third aspect, and the OLT and the sub device that are described in any implementation of the fourth aspect. Message transmission is performed between the OLT and the sub device through the main device.

Embodiments of this application provide a message transmission method, a main device, an OLT, and an optical communication system. A message format used for transmission between the main device and the OLT in an FTTR system is newly defined. In an uplink direction, the main device sends a second message to the OLT based on a first message sent by a sub device, where a first identifier of the sub device is newly added to the second message. In a downlink direction, the first identifier is also newly added to a third message sent by the OLT to the main device, so that the main device sends a fourth message to the corresponding sub device based on the third message. In other words, this solution implements management of the OLT on the sub device, and helps manage the FTTR system in a unified manner. In addition, an existing communication protocol may still be used between the main device and the sub device, and the management of the OLT on the sub device can be implemented without greatly adjusting the existing communication protocol. An application effect is good.

### BRIEF DESCRIPTION OF DRAWINGS

FIG. 1 is a schematic diagram of an FTTH system architecture;
FIG. 2 is a schematic diagram of an FTTR system architecture;
FIG. 3 is a schematic flowchart of a message transmission method according to an embodiment of this application;
FIG. 4 is a schematic diagram of a scenario in which an OLT manages a main device and a sub device according to an embodiment of this application;
FIG. 5 shows a format of a basic OMCI message that is newly defined according to an embodiment of this application;
FIG. 6 shows a format of an extended OMCI message that is newly defined according to an embodiment of this application;
FIG. 7 is a schematic diagram of a possible structure of a main device according to an embodiment of this application;
FIG. 8 is a schematic diagram of another possible structure of a main device according to an embodiment of this application;
FIG. 9 is a schematic diagram of a possible structure of an OLT according to an embodiment of this application; and
FIG. 10 is a schematic diagram of another possible structure of an OLT according to an embodiment of this application.

### DESCRIPTION OF EMBODIMENTS

Embodiments of this application provide a message transmission method, a main device, an OLT, and an optical communication system. A message format used for transmission between the main device and the OLT in an FTTR system is newly defined, and management of the OLT on a sub device is implemented, to help manage the FTTR system in a unified manner.

It should be noted that in the specification, the claims, and the foregoing accompanying drawings of this application, the terms "first", "second", "third", "fourth", and the like are used to distinguish between similar objects, but do not limit a particular order or sequence. It should be understood that the foregoing terms are interchangeable in proper cases, so that embodiments described in this application can be implemented in an order different from the content described in this application. In addition, the terms "include" and "have" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to the process, method, product, or device.

A passive optical network (passive optical network, PON) is an implementation technology of an optical access network, and the PON is an optical access technology of point-to-multipoint transmission. A current PON system is mainly used in a fiber to the home (fiber to the home, FTTH) scenario, and each home user has only one optical network unit (optical network unit, ONU).

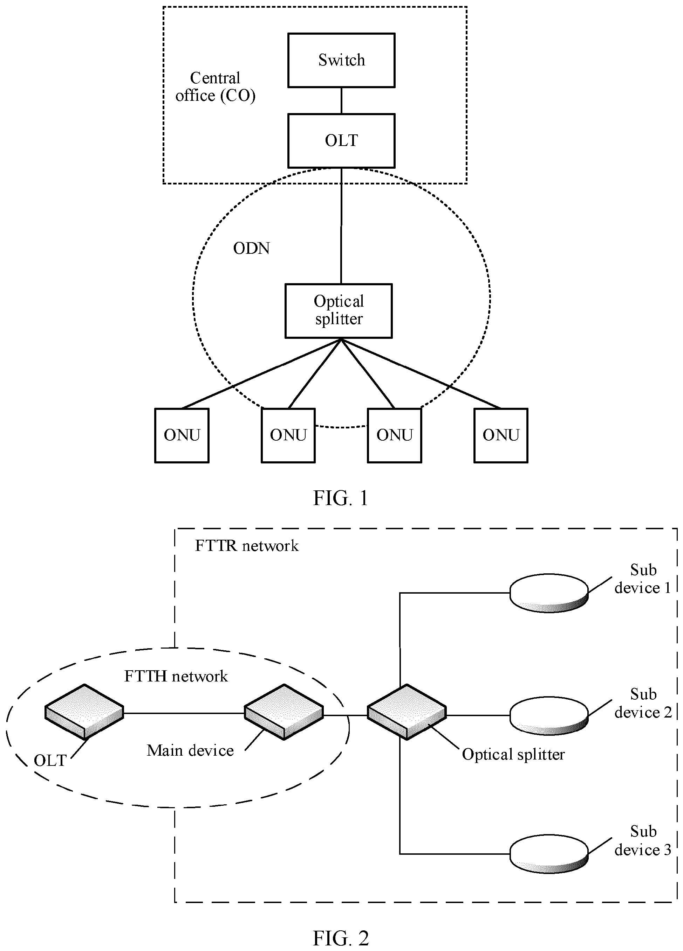

FIG. 1 is a schematic diagram of an FTTH system architecture. An optical line terminal (optical line terminal, OLT) is connected to an upper-layer network side device (for example, a switch or a router), and is connected to one or more lower-layer optical distribution networks (optical distribution networks, ODNs). The ODN includes a passive optical splitter for optical power distribution, a feeder fiber connected between the passive optical splitter and the OLT, and a branch fiber connected between the passive optical splitter and an ONU. During downlink data transmission, the ODN transmits downlink data of the OLT to each ONU through the optical splitter, and the ONU selectively receives downlink data that carries an identifier of the ONU. During uplink data transmission, the ODN combines, into one channel of an optical signal, optical signals sent by N channels of ONUs, and transmits the channel of the optical signal to the OLT. The ONU provides a user side interface for an OAN and is connected to the ODN. If the ONU also provides a user port function, for example, the ONU provides an Ethernet user port or a plain old telephone service (plain old telephone service, POTS) user port, the ONU is referred to as an optical network termination (optical network termination, ONT).

Based on FTTH, to resolve a problem of Wi-Fi coverage of a home network, a fiber may be further extended to a residential room. An optical terminal device that provides Wi-Fi access is installed inside the room, so that a distance between a user terminal and a Wi-Fi access point is reduced, thereby improving signal quality. This application scenario is referred to as a fiber to the room (fiber to the room, FTTR) scenario.

FIG. 2 is a schematic diagram of an FTTR system architecture. An FTTR network and an FTTH network may be considered as cascaded PON systems. In FTTH, an OLT is deployed in a central office, and an ONU is deployed in an information box of a home. A main device in FTTR may be deployed in the information box of the home in place of the ONU in FTTH. The main device in an FTTR scenario has a function similar to that of the OLT in an FTTH scenario, and the main device may also have a function similar to that of the ONU in the FTTH scenario. That is, the main device in FTTR is a device that has functions of both the OLT and the ONU, and may be used as a network device that serves as a connecting link between FTTH and FTTR. A sub device in FTTR may be deployed in each room of the home, and is configured to connect to a user terminal. The sub device and the ONU in FTTH are essentially similar network devices. A difference lies in that the ONU in FTTH is generally deployed in the information box and is usually separated from the user terminal by an access point (access point, AP). However, in FTTR, the sub device is installed in each room, and the sub device further has a function of the AP, and may directly perform a Wi-Fi connection with the user terminal.

It should be understood that, a plurality of sub devices may be deployed in FTTR, each sub device is connected to a corresponding downlink port on the main device, and the main device may manage and configure all the sub devices in a unified manner. It should be noted that, the main device may also be referred to as a "main gateway", a "main optical modem", a "main FTTR device", or the like, and the sub device may also be referred to as a "sub gateway", a "sub optical modem", a "sub FTTR device", or the like. Specific names are not limited in this application. For ease of description, the following uniformly uses the main device and the sub device for description.

Considering that there is a mature communication protocol between the OLT and the main device in the current FTTH scenario, management of the OLT on the main device can be implemented. However, there is no unified management manner for an FTTR system, in other words, a communication protocol between the OLT and the sub device is not mature. Therefore, in this application, a communication manner between the OLT and the sub device is established by newly defining a message format used between the OLT and the main device, so that management of the OLT on the sub device is implemented. In other words, if communication content between the OLT and the main device does not relate to the sub device, the OLT communicates with the main device by using a message format that has been defined in an existing standard. If communication content between the OLT and the main device relates to the sub device, the OLT communicates with the main device by using the message format newly defined in this application. A message format used for communication between the main device and the sub device may be the message format that has been defined in the existing standard, or may be the message format newly defined in this application. This is not specifically limited. The following describes in detail a message transmission method provided in this application.

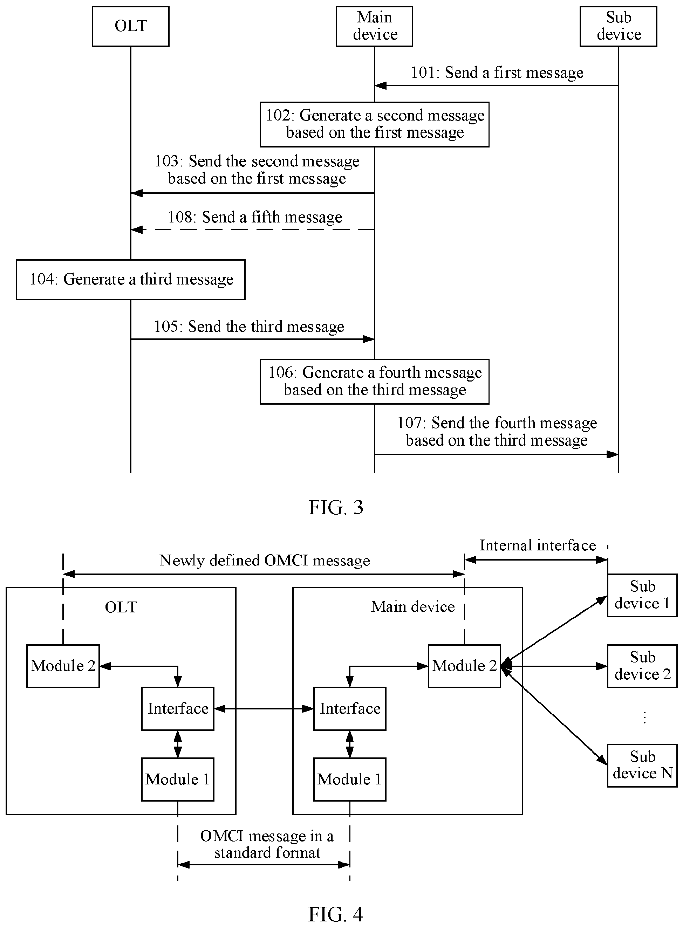

FIG. 3 is a schematic flowchart of a message transmission method according to an embodiment of this application. In this example, the message transmission method includes the following steps.

101: A sub device sends a first message to a main device.

The first message sent by the sub device to the main device includes an identifier (identifier, ID) of the sub device, an ID of an OLT, and message content (message content). It should be understood that, a type of the first message is not limited in this application. For example, the first message may be an optical network terminal management and control interface (optical network terminal management and control interface, OMCI) message that has been defined in an existing standard. For another example, the first message may alternatively be an OMCI message newly defined in this application.

102: The main device generates a second message based on the first message.

It should be noted that, the second message includes the ID of the sub device, so that the OLT identifies, based on the second message, that the message is a message related to the sub device. It should be understood that, the main device may simultaneously communicate with a plurality of sub devices, and each sub device is connected to a corresponding downlink port on the main device. Optionally, the second message further includes an ID of the downlink port that is on the main device and that is associated with the sub device, where the ID of the downlink port is referred to as a port ID for short. In other words, the main device determines, based on the first message, the downlink port corresponding to the sub device, and adds the port ID to the second message.

In an example, the second message carries message content that is the same as that of the first message. In other words, the main device may transparently transmit the message content in the first message to the OLT by using the second message. It should be understood that, the message content may be considered as to-be-transmitted message content, and does not include the ID of the sub device or the port ID. In another example, the first message and the second message may alternatively have different message content. In other words, the main device may alternatively generate, based on an actual requirement, message content to be transmitted to the OLT.

In a possible implementation, the second message is specifically a newly defined OMCI message, and the newly defined OMCI message is an extension based on a standard format. It should be understood that, an OMCI message in the standard format is used only for interaction between the OLT and the main device, and is not associated with the sub device. However, the second message sent by the main device to the OLT includes the message content from the sub device. Therefore, based on the OMCI message in the standard format, a field used to carry the ID of the sub device and the port ID of the main device needs to be newly defined, to distinguish from the OMCI message in the standard format. The following describes in detail a format of the newly defined OMCI message with reference to the accompanying drawings.

It should be noted that, a new definition is supplemented to a device identifier (device identifier) field in the newly defined OMCI message. It should be understood that, in the OMCI message in the standard format, a device identifier field is defined as 0x0A and 0x0B. 0x0A indicates that the OMCI message is a basic OMCI message used to transmit information exchanged between the OLT and the main device, and 0x0B indicates that the OMCI message is an extended OMCI message used to transmit information exchanged between the OLT and the main device. In the newly defined OMCI message, the device identifier field is newly defined as 0x1A and 0x1B. 0x1A indicates that the OMCI message is a basic OMCI message used to transmit information exchanged between the OLT and the sub device, and 0x1B indicates that the OMCI message is an extended OMCI message used to transmit information exchanged between the OLT and the sub device. In this way, the OLT can identify, based on the device identifier field in the OMCI message, whether the message is related to the main device or the sub device.

103: The main device sends the second message to the OLT based on the first message.

After generating the second message, the main device sends the second message to the OLT based on the ID of the OLT carried in the first message. In a possible implementation, the second message is in the format of the newly defined OMCI message, and the main device specifically sends the second message to the OLT through an optical network unit management and control channel (optical network unit management and control channel, OMCC).

104: The OLT generates a third message.

It should be noted that, the third message includes the ID of the sub device and message content, and the message content needs to be sent to the sub device. Optionally, the third message further includes the port ID of the main device. In an example, the third message is in the format of the newly defined OMCI message. In other words, the field used to carry the ID of the sub device and the port ID of the main device is newly defined in the third message.

That the third message is the newly defined OMCI message is used as an example. In the newly defined OMCI message, the device identifier field is newly defined as 0x1A and 0x1B. 0x1A indicates that the OMCI message is the basic OMCI message used to transmit the information exchanged between the OLT and the sub device, and 0x1B indicates that the OMCI message is the extended OMCI message used to transmit the information exchanged between the OLT and the sub device. In this way, the main device can identify, based on the device identifier field in the OMCI message, whether the message is related to the main device or the sub gateway.

In an example, in a scenario in which uplink transmission is performed before downlink transmission, because the second message carries the ID of the sub device and the port ID, the OLT specifically generates, based on the second message, a third message including the ID of the sub device and the port ID.

In another example, in a scenario in which downlink transmission is performed before uplink transmission, step 108 may alternatively be performed before step 104. To be specific, the main device sends a fifth message to the OLT, and reports information about the sub device by using the fifth message. The information about the sub device includes at least the ID of the sub device, so that the OLT can generate a third message including the ID of the sub device. Optionally, the main device further reports, to the OLT by using the fifth message, the port ID of the downlink port associated with the sub device, so that the OLT can generate a third message including the port ID. It should be understood that, the message reported by the main device to the OLT may be the OMCI message in the existing standard.

105: The OLT sends the third message to the main device.

That the third message is in the format of the newly defined OMCI message is used as an example. The OLT may specifically send the third message to the main device through the OMCC.

106: The main device generates a fourth message based on the third message.

In a possible implementation, if the fourth message is the OMCI message in the standard format, the fourth message does not include the ID of the sub device or the port ID of the main device. In other words, the main device reserves the message content in the third message and deletes the ID of the sub device and the port ID of the main device. In this way, an existing communication protocol may still be used between the main device and the sub device, and management of the OLT on the sub device can be implemented without greatly adjusting the existing communication protocol. An application effect is good. In another possible implementation, if the fourth message is the newly defined OMCI message, the fourth message includes the ID of the sub device and the port ID of the main device, and this is equivalent to that the main device forwards the received third message to the sub device.

In an example, the fourth message carries message content that is the same as that of the third message. In other words, the main device may transparently transmit the message content in the third message to the OLT by using the fourth message. It should be understood that, the message content may be considered as to-be-transmitted message content, and does not include the ID of the sub device or the port ID. In another example, the fourth message and the third message may alternatively have different message content. In other words, the main device may alternatively generate, based on an actual requirement, message content to be transmitted to the sub device.

107: The main device sends the fourth message to the sub device based on the third message.

After generating the fourth message, the main device determines, based on the ID of the sub device carried in the third message, a sub device corresponding to the fourth message, and sends the fourth message to the sub device.

It should be noted that, there is no fixed time sequence relationship between the foregoing step 101 to step 103 and step 104 to step 107. For example, step 101 to step 103 may be performed before step 104 to step 107, that is, uplink transmission is performed before downlink transmission. For another example, step 104 to step 107 may alternatively be performed before step 101 to step 103, that is, downlink transmission is performed before uplink transmission.

FIG. 4 is a schematic diagram of a scenario in which an OLT manages a main device and a sub device according to an embodiment of this application. In an example, both a module 1 of the main device and a module 1 of the OLT are configured to generate an OMCI message in a standard format, and both a module 2 of the main device and a module 2 of the OLT are configured to generate a newly defined OMCI message. Both the OMCI message in the standard format and the newly defined OMCI message are transmitted through an interaction interface that has been defined between the main device and the OLT. The OLT manages the main device by using the OMCI message in the standard format, and the OLT manages the sub device by using the newly defined OMCI message. It should be understood that, the module 1 and the module 2 in the OLT and the module 1 and the module 2 in the main device are merely logical function division. During actual application, the module 1 and the module 2 may be independent of each other, or may be integrated together.

The following describes in detail a format of the newly defined OMCI message in this application. It should be understood that, the format of the newly defined OMCI message is mainly applied to a second message and a third message that are transmitted between the OLT and the main device. Optionally, a first message and a fourth message that are transmitted between the main device and the sub device may also be in the format of the newly defined OMCI message. The format of the newly defined OMCI message includes a format of a basic OMCI message that is newly defined and a format of an extended OMCI message that is newly defined, and this may be flexibly selected based on a requirement during actual application.

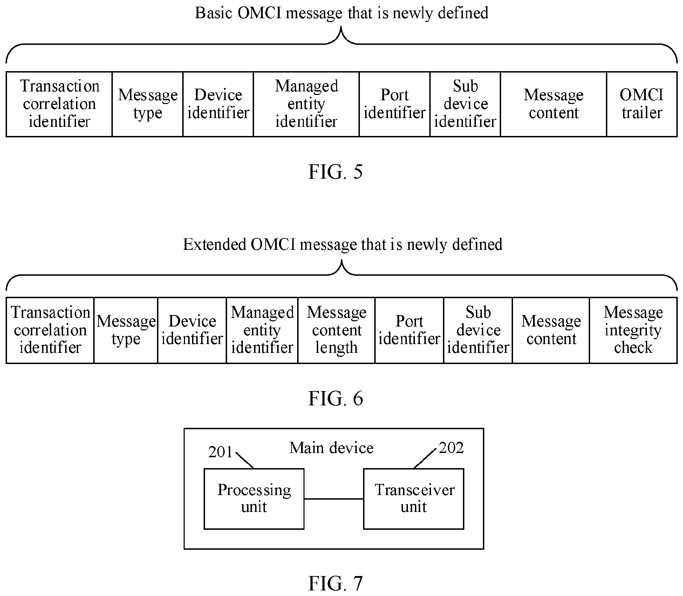

FIG. 5 shows a format of a basic OMCI message that is newly defined according to an embodiment of this application. As shown in FIG. 5, the basic OMCI message that is newly defined sequentially includes the following fields: a transaction correlation identifier (transaction correlation identifier), a message type (message type), a device identifier (device identifier), a managed entity identifier (managed entity identifier), a port identifier, a sub device identifier, message content (message content), and an OMCI trailer (OMCI trailer). The port identifier and the sub device identifier are newly added fields. In addition, the device identifier field is newly defined. For example, the device identifier field is 0x1A, which indicates that the OMCI message is a basic OMCI message used to transmit information exchanged between an OLT and a sub device.

It should be noted that, the OMCI trailer is used as a check field to check integrity of the OMCI message. In a GPON system, a cyclic redundancy check (cyclic redundancy check, CRC) 32 algorithm is used to check integrity of the OMCI message. In a 10G GPON system, a message integrity check (message integrity check, MIC) algorithm is used to check integrity of the OMCI message. Because the format of the basic OMCI message that is newly defined is different from a format of a basic OMCI message in an existing standard, the newly defined OMCI trailer is different from a standard OMCI trailer.

The following Table 1 shows a possible form of a length of each field in the format of the basic OMCI message that is newly defined. It should be understood that, FIG. 5 and Table 1 are merely a specific example. During actual application, the foregoing fields may alternatively be arranged in another manner and have specific lengths. For example, positions of the port identifier field and the sub device identifier field may alternatively be exchanged. This is not specifically limited herein.

**Table 1**

| Byte number | Length (byte) | Field |
|---|---|---|
| 1 and 2 | 2 | Transaction correlation identifier |
| 3 | 1 | Message type |
| 4 | 1 | Device identifier |
| 5 to 8 | 4 | Managed entity identifier |
| 9 | 1 | Port identifier |
| 10 | 1 | Sub device identifier |
| 11 to 42 | 32 | Message content |
| 43 to 48 | 6 | OMCI trailer |

FIG. 6 shows a format of an extended OMCI message that is newly defined according to an embodiment of this application. As shown in FIG. 6, the extended OMCI message that is newly defined sequentially includes the following fields: a transaction correlation identifier (transaction correlation identifier), a message type (message type), a device identifier (device identifier), a managed entity identifier (managed entity identifier), a message content length (message content length), a port identifier, a sub device identifier, message content (message content), and message integrity check (message integrity check, MIC). A maximum length of the extended OMCI message that is newly defined is 1980 bytes, and a maximum supported message content length is 1964 bytes. The port identifier and the sub device identifier are newly added fields. In addition, the device identifier field is newly defined. For example, the device identifier field is 0x1B, which indicates that the OMCI message is an extended OMCI message used to transmit information exchanged between an OLT and a sub device.

It should be noted that, the MIC is used as a check field to check integrity of the OMCI message. In a GPON system, a CRC32 algorithm is used to check integrity of the OMCI message. In a 10G GPON system, an MIC algorithm is used to check integrity of the OMCI message. Because the format of the extended OMCI message that is newly defined is different from a format of an extended OMCI message in an existing standard, the newly defined MIC field is different from a standard MIC field.

The following Table 2 shows a possible form of a length of each field in the format of the extended OMCI message that is newly defined. It should be understood that, FIG. 6 and Table 2 are merely a specific example. During actual application, the foregoing fields may alternatively be arranged in another manner and have specific lengths. For example, positions of the port identifier field and the sub device identifier field may alternatively be exchanged. This is not specifically limited herein.

**Table 2**

| Byte number | Length (byte) | Field |
|---|---|---|
| 1 and 2 | 2 | Transaction correlation identifier |
| 3 | 1 | Message type |
| 4 | 1 | Device identifier |
| 5 to 8 | 4 | Managed entity identifier |
| 9 and 10 | 2 | Message content length |
| 11 | 1 | Port identifier |
| 12 | 1 | Sub device identifier |
| 13 to (N-4) | - | Message content |
| (N-3) to N | 4 | Message integrity check |

It can be learned from the foregoing descriptions that, a message format used for transmission between a main device and an OLT in an FTTR system is newly defined in this application. In an uplink direction, the main device sends a second message to an OLT based on a first message sent by a sub device, where a first identifier of the sub device is newly added to the second message. In a downlink direction, the first identifier is also newly added to a third message sent by the OLT to the main device, so that the main device sends a fourth message to the corresponding sub device based on the third message. In other words, this solution implements management of the OLT on the sub device, and helps manage the FTTR system in a unified manner. In addition, an existing communication protocol may still be used between the main device and the sub device, and the management of the OLT on the sub device can be implemented without greatly adjusting the existing communication protocol. An application effect is good.

The following describes the main device and the OLT according to embodiments of this application.

FIG. 7 is a schematic diagram of a possible structure of a main device according to an embodiment of this application. As shown in FIG. 7, the main device includes a processing unit 201 and a transceiver unit 202. Specifically, the transceiver unit 202 is configured to perform operations of receiving and sending a message by the main device in the embodiment shown in FIG. 3. The processing unit 201 is configured to perform an operation of the main device other than message receiving and sending in the embodiment shown in FIG. 3.

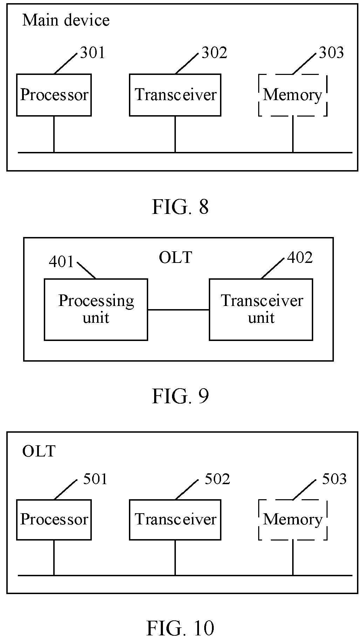

FIG. 8 is a schematic diagram of another possible structure of a main device according to an embodiment of this application. As shown in FIG. 8, the main device includes a processor 301 and a transceiver 302. The processor 301 and the transceiver 302 are connected to each other through a line. It should be noted that, the transceiver 302 is configured to perform operations of receiving and sending a message by the main device in the embodiment shown in FIG. 3. The processor 301 is configured to perform an operation of the main device other than message receiving and sending in the embodiment shown in FIG. 3. In some possible implementations, the processor 301 includes the foregoing processing unit 201, and the transceiver 302 includes the foregoing transceiver unit 202. Optionally, the main device may further include a memory 303, where the memory 303 is configured to store program instructions and data.

FIG. 9 is a schematic diagram of a possible structure of an OLT according to an embodiment of this application. As shown in FIG. 9, the OLT includes a processing unit 401 and a transceiver unit 402. Specifically, the transceiver unit 402 is configured to perform operations of receiving and sending a message by the OLT in the embodiment shown in FIG. 3. The processing unit 401 is configured to perform an operation of the OLT other than message receiving and sending in the embodiment shown in FIG. 3.

FIG. 10 is a schematic diagram of another possible structure of an OLT according to an embodiment of this application. As shown in FIG. 10, the OLT includes a processor 501 and a transceiver 502. The processor 501 and the transceiver 502 are connected to each other through a line. It should be noted that, the transceiver 502 is configured to perform operations of receiving and sending a message by the OLT in the embodiment shown in FIG. 3. The processor 501 is configured to perform an operation of the OLT other than message receiving and sending in the embodiment shown in FIG. 3. In some possible implementations, the processor 501 includes the foregoing processing unit 401, and the transceiver 502 includes the foregoing transceiver unit 402. Optionally, the OLT may further include a memory 503, where the memory 503 is configured to store program instructions and data.

It should be noted that, the processors shown in FIG. 8 and FIG. 10 may use a general-purpose central processing unit (central processing unit, CPU), a microprocessor, an application-specific integrated circuit ASIC, or at least one integrated circuit, to execute a related program, to implement the technical solutions provided in embodiments of this application. The memories shown in FIG. 8 and FIG. 10 may store an operating system and another application program. When the technical solutions provided in embodiments of this application are implemented through software or firmware, a program code used to implement the technical solutions provided in embodiments of this application is stored in the memory, and is executed by the processor. In an embodiment, the memory may be included inside the processor. In another embodiment, the processor and the memory are two independent structures.

A person skilled in the art may clearly understand that, for the purpose of convenient and brief description, for a detailed working process of the foregoing described system, apparatus, and unit, refer to a corresponding process in the foregoing method embodiments. Details are not described herein again.

A person of ordinary skill in the art may understand that all or some of the steps in the foregoing embodiments may be implemented through hardware or a program instructing related hardware. The program may be stored in a computer-readable storage medium. The storage medium mentioned above may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether these functions are performed by hardware or software depends on particular applications and design constraints of the technical solutions. A person skilled in the art may use different methods to implement the described functions for each specific application, but it should not be considered that the implementation goes beyond the scope of this application.

When software is used to implement the foregoing embodiments, all or some of the method steps described in the foregoing embodiments may be implemented in a form of a computer program product. The computer program product includes one or more computer instructions. When the computer program instructions are loaded and executed on a computer, some or all of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, a fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A message transmission method, comprising:
receiving, by a main device, a first message sent by a sub device, wherein the first message comprises a first identifier of the sub device;
sending, by the main device, a second message to an optical line terminal OLT based on the first message, wherein the second message comprises the first identifier;
receiving, by the main device, a third message sent by the OLT, wherein the third message comprises the first identifier; and
sending, by the main device, a fourth message to the sub device based on the third message.

2. The method according to claim 1, wherein the second message and the third message further comprise a second identifier of a downlink port that is on the main device and that is associated with the sub device.

3. The method according to claim 1 or 2, wherein the second message and the third message are optical network terminal management and control interface OMCI messages.

4. The method according to claim 3, wherein a device identifier field of the OMCI message indicates that the OMCI message is a basic OMCI message or an extended OMCI message used to transmit information exchanged between the OLT and the sub device.

5. The method according to any one of claims 1 to 4, wherein the second message further comprises a check field used to check integrity of the second message, and the third message further comprises a check field used to check integrity of the third message.

6. The method according to any one of claims 1 to 5, wherein the first message comprises a third identifier of the OLT, and the sending, by the main device, a second message to an optical line terminal OLT based on the first message comprises:
generating, by the main device, the second message based on the first message, and sending the second message to the OLT based on the third identifier; and
the sending, by the main device, a fourth message to the sub device based on the third message comprises:
generating, by the main device, the fourth message based on the third message, and sending the fourth message to the sub device based on the first identifier.

7. The method according to any one of claims 1 to 6, wherein the first message and the second message have same message content, and/or the third message and the fourth message have same message content.

8. The method according to any one of claims 1 to 7, wherein before the receiving, by the main device, a third message sent by the OLT, the method further comprises:
sending, by the main device to the OLT, a fifth message comprising the first identifier, to enable the OLT to generate the third message based on the fifth message.

9. A message transmission method, comprising:
receiving, by an optical line terminal OLT, a second message sent by a main device, wherein the second message is generated by the main device based on a first message sent by a sub device, the first message comprises a first identifier of the sub device, and the second message comprises the first identifier; and
sending, by the OLT, a third message to the main device, to enable the main device to send a fourth message to the sub device based on the third message, wherein the third message comprises the first identifier.

10. The method according to claim 9, wherein the second message and the third message further comprise a second identifier of a downlink port that is on the main device and that is associated with the sub device.

11. The method according to claim 9 or 10, wherein the second message and the third message are optical network terminal management and control interface OMCI messages.

12. The method according to claim 11, wherein a device identifier field of the OMCI message indicates that the OMCI message is a basic OMCI message or an extended OMCI message used to transmit information exchanged between the OLT and the sub device.

13. The method according to any one of claims 9 to 12, wherein the second message further comprises a check field used to check integrity of the second message, and the third message further comprises a check field used to check integrity of the third message.

14. The method according to any one of claims 9 to 13, wherein the first message and the second message have same message content, and/or the third message and the fourth message have same message content.

15. The method according to any one of claims 9 to 14, wherein before the sending, by the OLT, a third message to the main device, the method further comprises:
receiving, by the OLT, a fifth message that is sent by the main device and that comprises the first identifier; and
generating, by the OLT, the third message based on the fifth message.

16. A main device, comprising a processing unit and a transceiver unit, wherein
the transceiver unit is configured to receive a first message sent by a sub device, wherein the first message comprises a first identifier of the sub device;
the processing unit is configured to generate a second message based on the first message, wherein the second message comprises the first identifier of the sub device;
the transceiver unit is configured to send the second message to an optical line terminal OLT based on the first message;
the transceiver unit is configured to receive a third message sent by the OLT, wherein the third message comprises the first identifier;
the processing unit is configured to generate a fourth message based on the third message; and
the transceiver unit is configured to send the second message to the sub device based on the third message.

17. The main device according to claim 16, wherein the second message and the third message further comprise a second identifier of a downlink port that is on the main device and that is associated with the sub device.

18. The main device according to claim 16 or 17, wherein the second message and the third message are optical network terminal management and control interface OMCI messages.

19. The main device according to claim 18, wherein a device identifier field of the OMCI message indicates that the OMCI message is a basic OMCI message or an extended OMCI message used to transmit information exchanged between the OLT and the sub device.

20. The main device according to any one of claims 16 to 19, wherein the second message further comprises a check field used to check integrity of the second message, and the third message further comprises a check field used to check integrity of the third message.

21. The main device according to any one of claims 16 to 20, wherein the first message comprises a third identifier of the OLT, and the transceiver unit is specifically configured to:
send the second message to the OLT based on the third identifier; and
send the fourth message to the sub device based on the first identifier.

22. The main device according to any one of claims 16 to 21, wherein the first message and the second message have same message content, and/or the third message and the fourth message have same message content.

23. The main device according to any one of claims 16 to 22, wherein before the transceiver unit receives the third message sent by the OLT, the transceiver unit is further configured to send, to the OLT, a fifth message comprising the first identifier, to enable the OLT to generate the third message based on the fifth message.

24. An optical line terminal OLT, comprising a processing unit and a transceiver unit, wherein
the transceiver unit is configured to receive a second message sent by a main device, wherein the second message is generated by the main device based on a first message sent by a sub device, the first message comprises a first identifier of the sub device, and the second message comprises the first identifier;
the processing unit is configured to generate a third message, wherein the third message comprises the first identifier; and
the transceiver unit is configured to send the third message to the main device, to enable the main device to send a fourth message to the sub device based on the third message.

25. The OLT according to claim 24, wherein the second message and the third message further comprise a second identifier of a downlink port that is on the main device and that is associated with the sub device.

26. The OLT according to claim 24 or 25, wherein the second message and the third message are optical network terminal management and control interface OMCI messages.

27. The OLT according to claim 26, wherein a device identifier field of the OMCI message indicates that the OMCI message is a basic OMCI message or an extended OMCI message used to transmit information exchanged between the OLT and the sub device.

28. The OLT according to any one of claims 24 to 27, wherein the second message further comprises a check field used to check integrity of the second message, and the third message further comprises a check field used to check integrity of the third message.

29. The OLT according to any one of claims 24 to 28, wherein the first message and the second message have same message content, and/or the third message and the fourth message have same message content.

30. The OLT according to any one of claims 24 to 29, wherein before the transceiver unit sends the third message to the main device, the transceiver unit is further configured to receive a fifth message that is sent by the main device and that comprises the first identifier, and the processing unit is further configured to generate the third message based on the fifth message.

31. An optical communication system, comprising the main device according to any one of claims 16 to 23, the optical line terminal OLT and the sub device according to any one of claims 24 to 30, wherein message transmission is performed between the OLT and the sub device through the main device.
